# EUROPEAN PATENT APPLICATION

(11) **EP 1 897 742 A1**
(43) Date of publication of application: **12.03.2008**
(21) Application number: 07115829.9
(22) Date of filing: 06.09.2007
(51) Int. Cl.: B60K 13/04, B66F 9/075

(54) **Exhaust structure of industrial vehicle**

(30) Priority: 08.09.2006 JP 2006244524
(71) Applicant: KABUSHIKI KAISHA TOYOTA JIDOSHOKKI, Kariya-shi, Aichi 448-8671 (JP)
(72) Inventor: Murase, Takashi, Kariya-shi Aichi 448-8671 (JP); Nakano, Ryuji, Kariya-shi Aichi 448-8671 (JP); Shibahara, Fumihiro, Kariya-shi Aichi 448-8671 (JP)
(74) Representative: TBK-Patent

(57) **Abstract**

An exhaust structure for a forklift (10) having an engine (29) mounted in a rear section is disclosed. The exhaust structure includes a conducting pipe (40), a sub-muffler (39), and a sub-exhaust pipe (41). The conducting pipe (40) conducts exhaust gas discharged from the engine (29) to a front section of the forklift (10). The sub-muffler (39) is arranged in a front section of the forklift and connected to the conducting pipe (40). The sub-exhaust pipe (41) conducts exhaust gas that has passed through the sub-muffler (39) to the rear section of the forklift. The conducting pipe (40), the sub-muffler (39), and the sub-exhaust pipe (41) are attached to a lower portion of the forklift.

## Description

### BACKGROUND OF THE INVENTION

The present invention relates to an exhaust structure of an industrial vehicle on which an engine is mounted in a rear portion.

A counterbalance forklift on which an engine is mounted is known as a type of industrial vehicle. Such a forklift is, for example, equipped with an exhaust structure disclosed in Japanese Laid-Open Patent Publication No. 7-9867, which discharges exhaust gas of the engine to the outside of the vehicle. Specifically, a muffler coupled to the engine is accommodated in an accommodation portion located in the weight portion in a rear section of the vehicle body. An exhaust pipe is connected to the muffler. After flowing into the muffler, exhaust gas is exhaust to the outside from a lower end portion of the weight portion through the exhaust pipe.

In recent years, noises of any vehicles having an engine, including automobiles, have been demanded to be reduced. Accordingly, industrial vehicles such as forklifts with an engine have been demanded to have an improved noise reducing performance. Japanese Laid-Open Patent Publication Nos. 7-9867 and 2004-269209 each disclose a forklift having a muffler located in a weight portion. However, since various kinds of devices such as a radiator and an engine control unit are mounted on the weight portion, the space for the muffler is limited. Accordingly, it is difficult to reserve a space for mounting a large capacity muffler, which has an excellent noise reducing performance, or a number of mufflers.

Accordingly, it is an objective of the present invention to provide an exhaust structure of an industrial vehicle that flexibly responds to the limitation of a space in a vehicle body.

To achieve the foregoing objective and in accordance with one aspect of the present invention, an exhaust structure for an industrial vehicle having an engine mounted in a rear section of the vehicle is provided. The exhaust structure includes a first pipe, a muffler, and a second pipe. The first pipe conducts exhaust gas discharged from the engine to a front section of the vehicle. The muffler is located in the front section of the vehicle and connected to the first pipe. The second pipe conducts the exhaust gas that has passed through the muffler to the rear section of the vehicle. The first pipe, the muffler, and the second pipe are attached to a lower portion of the vehicle.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic side view illustrating a forklift according to one embodiment of the present invention;
Fig. 2 is a bottom view of the forklift shown in Fig. 1;
Fig. 3 is a perspective view illustrating the sub-exhaust portion shown in Fig. 2;
Fig. 4 is a perspective view illustrating a muffler in the sub-exhaust portion shown in Fig. 3;
Fig. 5 is a perspective view illustrating an inlet of a conducting pipe of the sub-exhaust portion shown in Fig. 3;
Fig. 6 is a cross-sectional view taken along line 6-6 of Fig. 2; and
Figs. 7A and 7B are cross-sectional views illustrating pipe structure of modified embodiments.

### DETAILED DESCRIPTION OF THE PREFERRED EMBODIMENTS

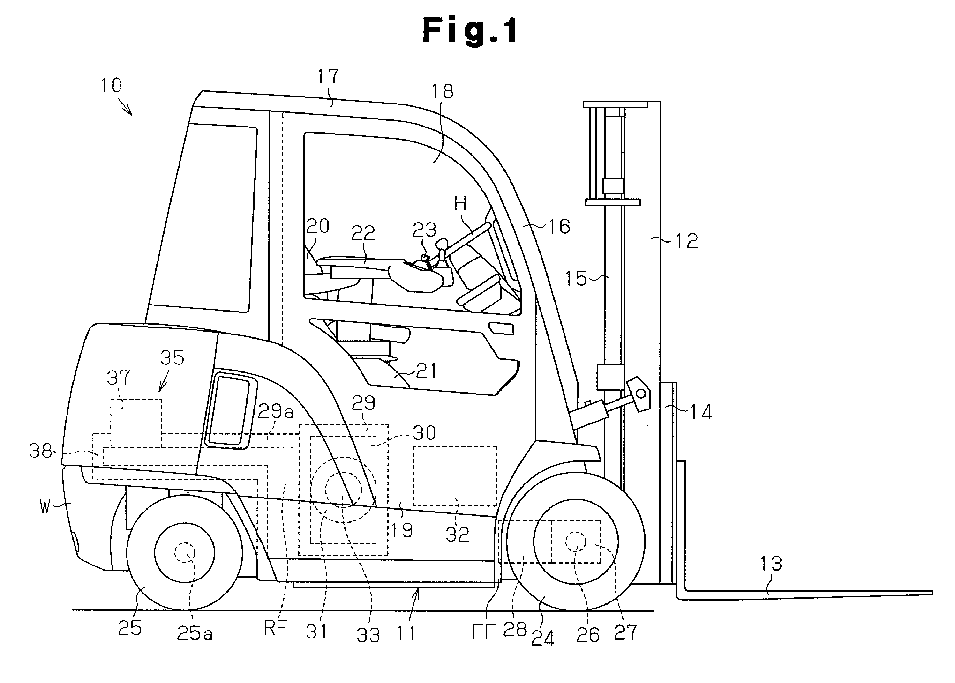

Hereinafter, an exhaust structure according to one embodiment of the present invention will now be described with reference to Figs 1 to 6. The exhaust structure is mounted on an industrial vehicle, which is a forklift 10 (a counterbalance cargo handling vehicle). The forklift 10 of the present embodiment has both of a motor 28, which is a driving source for traveling, and an engine 29, which is a driving source for handling cargos. That is, the forklift 10 of the present embodiment is a hybrid forklift. In the following, the direction in which a driver of the forklift 10 faces in the forward direction of the forklift 10 (advancing direction) is defined as a forward direction. The backward, leftward, rightward, upward, and downward directions are defined with reference to the forward direction.

As shown in Fig. 1, the forklift 10 is provided with a vehicle body 11 and a mast 12 placed in front of this. A cargo handling attachment, or a fork 13, is attached to the mast 12 with a lift bracket 14. The fork 13 is raised and lowered together with the lift bracket 14 when the lift cylinder 15 operates so as to extend and contract. The cargo handling actuators for the lift cylinder 15 and the tilt cylinder (not shown) for tilting the fork 13 operate when receiving supply of hydraulic oil through the hydraulic oil circuit, including a hydraulic pump 33.

Four poles 16 are provided in the vehicle body 11, and the poles 16 on the front from among these are formed so as to be integrated with a head guard 17. The space surrounded by the poles 16 and the head guard 17 forms the cab 18. The cab 18 is separated from the outside by the windows on the front and rear side and the doors 19, which are provided on both sides, left and right, and can be opened and closed. The cab 18 can be opened to the outside via the doors 19.

An openable engine hood 21 is provided in a cabin 18. A seat 20 is located on the engine hood 21. An armrest 22 for the operator to rest an arm is mounted on the right side of the seat 20. The armrest 22 rotates (displaces) between the position for use where the portion on which an arm rests is placed horizontally (state of Fig. 1, for example) and the position for non-use where the portion on which an arm rests is tilted to the rear. A cargo handling operation portion 23 for operating the cargo handling actuators of the lift cylinder 15, the tilt cylinder and the like is provided in the front portion of the armrest 22. The cargo handling operation portion 23 includes a lift lever for the operations of raising and lowering the fork and a tilt lever for the operations of tilting the mast forward and backward. A steering wheel H is provided in a front of the seat 20.

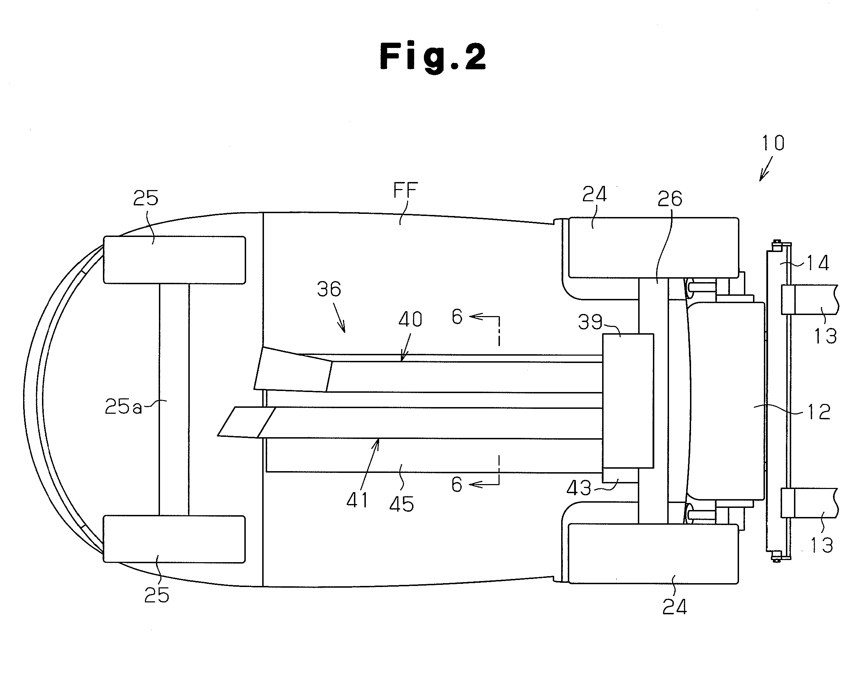

Drive wheels (front wheels) 24 are located in front of the vehicle body 11, and steered wheels (rear wheels) 25 are provided in rear of the vehicle body 11. The drive wheels 24 are driven by a vehicle driving motor 28 via a differential apparatus 27 which is mounted on the axle 26 and gears (not shown). In addition, the steered wheels 25 are steered in accordance with the operation of the steering wheel H. In Figs. 1 and 2, reference number 25a is attached to an axle of the steered wheels 25.

A body frame, which forms the vehicle body 11, includes a front frame portion FF, a rear frame portion RF, and a weight portion W. The front frame portion FF includes a number of thick plates (steel plates), which are integrated through welding. The rear frame portion RF and the weight portion W are each a casting. The rear frame portion RF is fastened to a rear section of the front frame portion FF. The weight portion W is fastened to a rear section of the rear frame portion RF.

The engine 29, a clutch 30, a motor generator 31, and a hydraulic pump 33 are fixed to the rear frame portion RF and covered with the engine hood 21. The engine 29 is located in a rear section of the vehicle body 11. More specifically, the engine 29 is located rearward of a center of the vehicle body 11 in the longitudinal direction. In the forklift 10, the space below the floor, on which driver's feet are placed, is small, and the engine 29 cannot be accommodated in the space. Therefore, the engine 29 is accommodated in a space underneath the engine hood 21, which is located below the seat 20. As a result, the engine 29 is located in a rear portion of the vehicle body 11. A motor generator 31 is connected to the engine 29 via a clutch 30. The motor generator 31 can be appropriately switched between a power generating mode where it operates as a power generator and a motor mode where it operates as a motor. In the power generating mode, the motor generator 31 is driven by the engine 29 so as to generate power which is then stored (charged) in a battery (secondary battery) 32. In the motor mode, the motor generator 31 receives power from the battery 32 and actuates the hydraulic pump 33. This switching control is carried out on the basis of an instruction from a control unit through an inverter assembly (not shown).

In the case where the motor generator 31 is in the power generating mode, the engine 29 functions as the drive source for the motor generator 31 and the hydraulic pump 33. Meanwhile, in the case when the motor generator 31 is in the motor mode, the engine 29 and the motor generator 31 function as the drive source for the hydraulic pump 33. It is also possible to disconnect the clutch 30 in the motor mode so that only the motor generator 31, without the engine 29, is used as the drive source for the hydraulic pump 33. The control of disconnecting and connecting the clutch 30 is carried out through a control signal from the control unit. That is to say, in the case where the motor generator 31 is in the motor mode, the motor generator 31 functions as the drive source for the hydraulic pump 33.

The battery 32 stores electricity generated by the motor generator 31 functioning in the power generating mode, and supplies stored electricity to the vehicle driving motor 28 and the motor generator 31 as necessary for driving the forklift 10 and handling cargos. Storage of electricity to the battery 32 and discharge of electricity of the battery 32 are controlled through the inverter assembly, which is connected to the control unit.

A battery accommodating portion (not shown) extending in the direction of the width of the vehicle body 11 is provided in front of the engine hood 21 and beneath the cab 18, that is to say, beneath the floor. The battery accommodating portion accommodates the battery 32. A plurality of battery cells are accommodated within a battery case of the battery 32. A nickel hydrogen storage battery, for example, is used as the battery 32.

The forklift 10 of the present embodiment runs by driving the vehicle driving motor 28. At the time of the cargo handling operations, the hydraulic pump 33 is actuated by the motor generator 31 and the engine 29. In the case of a forklift provided with only one of the motor or engine 29, it is necessary to mount a large scale motor or engine in order to deal with the maximum load. In many cases, such a motor or engine is driven in a state of a low output, thereby making the energy efficiency poor. In the case of the forklift 10 according to the present embodiment, however, the vehicle driving motor 28, the motor generator 31, and the engine 29 are driven so that the output is in a range for efficient driving. Accordingly, the fuel efficiency increases and the time for driving the engine 29 becomes short in comparison with that of engine forklifts, and thus, the amount of discharge of the exhaust gases (carbon dioxide and NOx) becomes small.

Hereinafter, the exhaust structure of the forklift 10 according to the present embodiment will be described.

The forklift 10 of the present embodiment has -a main exhaust portion 35, functioning as a main path of exhaust, and sub-exhaust portion 36 (shown in Fig. 2), functioning as an auxiliary path of exhaust. The main exhaust portion 35 and the sub-exhaust portion 36 form the exhaust structure.

The main exhaust portion 35 is located in a rear section of the vehicle body 11 as shown in Fig. 1. The main exhaust portion 35 includes a main muffler 37 and a main exhaust pipe 38. The main muffler 37 reduces the exhaust noise of the engine 29. The main exhaust pipe 38 conducts exhaust gas that has passed through the main muffler 37 to the sub-exhaust portion 36. The main muffler 37 is fixed to the rear frame portion RF located in the rear section of the vehicle body 11. One end of the main exhaust pipe 38 is connected to an exhaust outlet of the main muffler 37, and the other end of the main exhaust pipe 38 is connected to the sub-exhaust portion 36. An exhaust gas pipe 29a extending from the engine 29 is connected to an exhaust inlet of the main muffler 37. Therefore, in the main exhaust portion 35, exhaust gas of the engine 29 flows into the main muffler 37 from the exhaust gas pipe 29a. After passing through the main muffler 37, the exhaust gas is conducted to the sub-exhaust portion 36 through the main exhaust pipe 38. The exhaust gas pipe 29a and the main exhaust pipe 38 form an exhaust path extending between the engine 29 and the sub-exhaust portion 36.

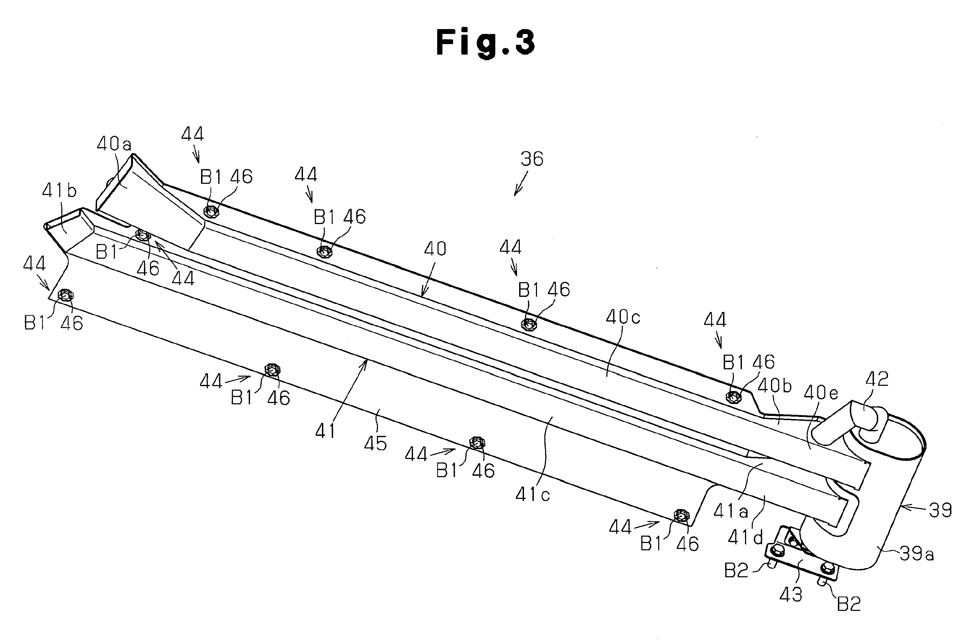

On the other hand, the sub-exhaust portion 36 is located in a lower section of the vehicle body 11 as shown in Fig. 2. Specifically, the sub-exhaust portion 36 is located on a lower surface of the front frame portion FF, and is exposed to the outside of the vehicle body 11. As shown in Fig. 3, the sub-exhaust portion 36 includes the sub-muffler 39, a conducting pipe 40 serving as a first pipe, and a sub-exhaust pipe 41 serving as a second pipe. The sub-muffler 39 reduces the exhaust noise of the engine 29. The conducting pipe 40 conducts exhaust gas from the main exhaust pipe 38 to the sub-muffler 39. The sub-exhaust pipe 41 discharges exhaust gas that has passed through the sub-muffler 39 to the outside.

The sub-muffler 39 is formed as a cylinder having an elliptical cross section, and has a pair of end plates. An exhaust inlet is formed in one of the end plates, and an attaching portion 43 is provided in the other end plate. A guiding pipe 42 is connected to the exhaust inlet. The guiding pipe 42 guides exhaust gas that has passed through the conducting pipe 40 to the sub-muffler 39. The attaching portion 43 is provided for attaching the sub-muffler 39 to the lower section of the vehicle body 11.

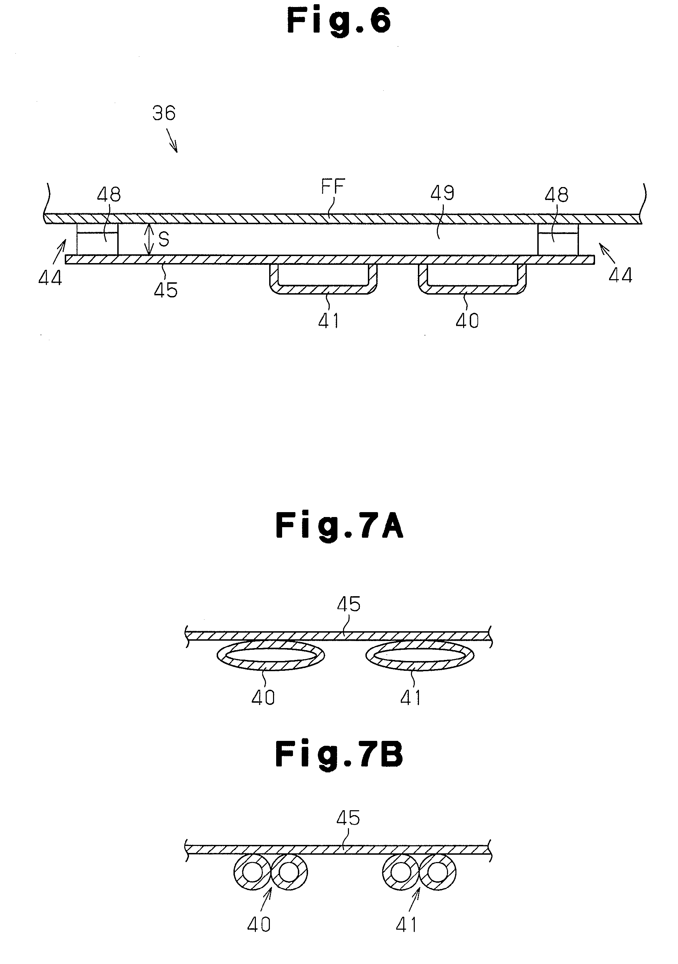

The conducting pipe 40 is slightly shorter than the distance between the axle 26 of the drive wheels (front wheels) 24 and the axle 25a of the steered wheels (rear wheels) 25, that is, slightly shorter than the wheelbase. The conducting pipe 40 includes an inlet section 40a serving as an exhaust inlet, an outlet section 40b serving as an exhaust outlet, and a passage section 40c. The inlet section 40a is connected to the main exhaust pipe 38. The outlet section 40b is connected to the guiding pipe 42. The passage section 40c connects the inlet section 40a to the outlet section 40b. As shown in Fig. 6, the passage section 40c of the guiding pipe 40 has a cross section (cross section perpendicular to the direction in which the pipe 40 extends) that is long sideways (flattened). That is, the cross section of the passage section 40c is greater in the lateral dimension (the width of the pipe 40) than in the vertical dimension (the vertical dimension of the pipe 40). In the present embodiment, the cross section of the passage section 40c is rectangular. The cross-sectional area (the flow passage area of exhaust gas) of the passage section 40c, which has such a cross-sectional shape, is greater than the cross-sectional area of a pipe having a circular cross section when the vertical dimension and width of the cross section of the passage section 40c are equal to those of the circular cross section pipe, respectively.

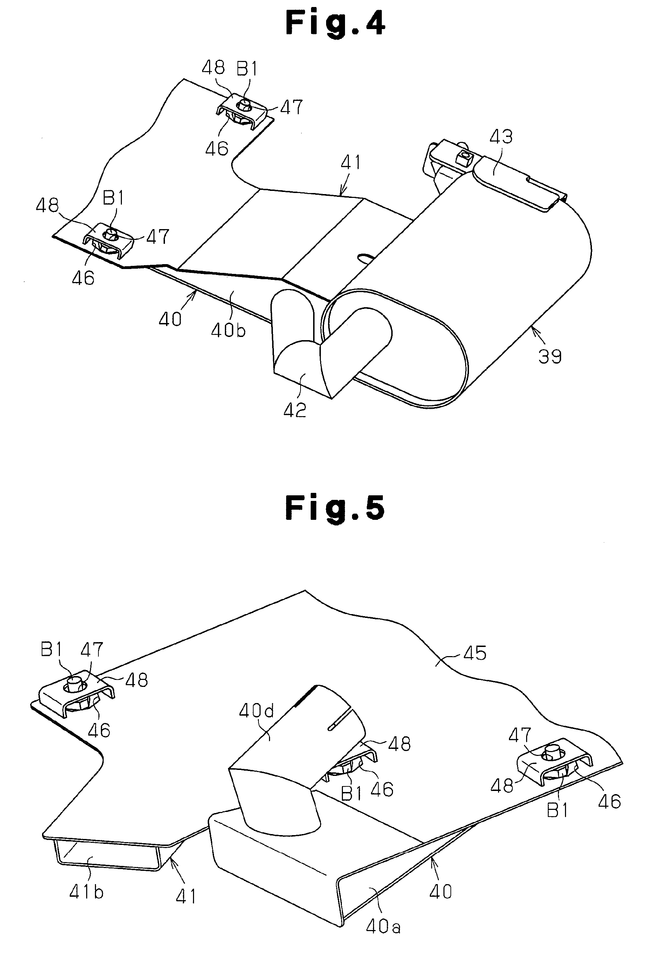

The width of the passage section 40c is constant over the entire length. Also, the vertical dimension of the passage section 40c is constant. The passage section 40c extends linearly. As shown in Figs. 3 and 4, the width of the outlet section 40b of the guiding pipe 40 is constant. In contrast, the vertical dimension of the outlet section 40b is gradually increased as the distance from the passage section 40c increases (toward the end of the guiding pipe 40). Accordingly, the volume of the outlet section 40b per unit length is greater than the volume per unit length of the passage section 40c, so as to suppress the interference of gas flow. That is, the cross-sectional area of the outlet section 40b is greater than the cross-sectional area of the passage section 40c, and increases toward the end of the conducting pipe 40. The widths of the inlet section 40a of the conducting pipe 40 is gradually increased as the distance from the passage section 40c increases as shown in Figs. 3 and 5 (toward the end of the conducting pipe 40). Likewise, the vertical dimension of the inlet section 40a is gradually increased as the distance from the passage section 40c increases. Accordingly, the volume of the inlet section 40a per unit length is greater than the volume per unit length of the passage section 40c, so as to suppress the interference of gas flow. That is, the cross-sectional area of the inlet section 40a is greater than the cross-sectional area of the passage section 40c, and increases toward the end of the conducting pipe 40. Further, a coupling pipe 40d is provided at the inlet section 40a as shown in Fig. 5. The coupling pipe 40d is connected to the main exhaust pipe 38.

The sub-exhaust pipe 41 is slightly shorter than the distance between the axle 26 of the drive wheels (front wheels) 24 and the axle 25a of the steered wheels (rear wheels) 25, that is, slightly shorter than the wheelbase. That is, the length of the sub-exhaust pipe 41 is substantially the same as the length of the conducting pipe 40. The sub-exhaust pipe 41 includes an inlet section 41a serving as an exhaust inlet, an outlet section 41b serving as an exhaust outlet, and the passage section 41c. The inlet section 41a is connected to the sub-muffler 39. The outlet section 41b opens to the outside of the vehicle body 11. The passage section 41c connects the inlet section 41a to the outlet section 41b. Like the passage section 40c, the passage section 41c of the sub-exhaust pipe 41 has a cross section that is long sideways (flattened) as shown in Fig 6. That is, the cross section of the passage section 41c is greater in the lateral dimension (the width of the pipe 41) than in the vertical dimension (the vertical dimension of the pipe 41). In the present embodiment, the cross section of the sub-exhaust pipe 41 is rectangular. The cross-sectional area of the passage section 41c, which has such a cross-sectional shape, is greater than the cross-sectional area of a pipe having a circular cross section when the vertical dimension and width of the cross section of the passage section 41c are equal to those of the circular cross section pipe, respectively.

The width of the passage section 41c is constant over the entire length. Also, the vertical dimension of the passage section 41c is constant. The passage section 41c extends linearly. The width and the vertical dimension of the passage section 41c of the sub-exhaust pipe 41 are equal to the width and the vertical dimension of the passage section 40c of the conducting pipe 40, respectively. Also, as shown in Figs. 3 and 4, the inlet section 41a has a constant width, while its vertical dimension is gradually increased as the distance from the passage section 41c increases (toward the end of the sub-exhaust pipe 41). That is, is the width and the vertical dimension of the inlet section 41a are equal to the width and the vertical dimension of the outlet section 40b of the conducting pipe 40, respectively. Accordingly, the volume of the inlet section 41a per unit length is greater than the volume per unit length of the passage section 41c, so as to suppress the interference of gas flow. That is, the cross-sectional area of the inlet section 41a is greater than the cross-sectional area of the passage section 41c, and increases toward the end of the sub-exhaust pipe 41. As shown in Figs. 3 and 5, the width and the vertical dimension of the outlet section 41b of the sub-exhaust pipe 41 are equal to the width and the vertical dimension of the passage section 41c, respectively. The outlet section 41b is bent relative to the passage section 41c by a predetermined angle.

The conducting pipe 40 and the sub-exhaust pipe 41 are formed of members having a U-shaped cross section as shown in Fig. 6. These members are welded to one surface of a base plate 45 formed of a flat steel plate so as to have a rectangular cross section. The base plate 45 has fastening portions 44. Each fastening portion 44 includes a through hole 46 and an attaching seat 48 having a channel-like cross section. The through hole 46 is formed in the base plate 45 and receives a bolt B1 functioning as a fastener. The attaching seats 48 are provided on the surface opposite to the surface on which the conducting pipe 40 and the sub-exhaust pipe 41 are located. The position of the attaching seats 48 correspond to the positions of the through holes 46. The attaching seats 48 are integrated with the base plate 45 through welding. Each attaching seat 48 has a through hole 47 for receiving the bolt B1.

This structure integrates and unitizes the sub-muffler 39, the conducting pipe 40, and the sub-exhaust pipe 41, so that the sub-exhaust portion 36 of the present embodiment is obtained. That is, the sub-muffler 39, the conducting pipe 40, and the sub-exhaust pipe 41 form a single assembly. The guiding pipe 42 and the attaching portion 43 are provided at predetermined positions in the unitized sub-exhaust portion 36. The sub-exhaust portion 36 is fixed to the base plate 45. The unitization of the sub-exhaust portion 36 refers to a state in which the components of the sub-exhaust portion 36 including the sub-muffler 39 can be installed in the vehicle body all together without being separated. In the present embodiment, the base plate 45, to which the sub-exhaust portion 36 is fastened to the front frame portion FF by the bolts B1 with the surface to which the attaching seats 48 are fixed facing the lower surface of the front frame portion FF. The sub-muffler 39 is located between the drive wheels 24, and is fastened to the vehicle body 11 by the attaching portions 43 and the bolts B2. As a result, the sub-muffler 39 is located in a lower portion of the drive unit (not shown). In the present embodiment, the sub-muffler 39 is arranged such that its axis agrees with the direction of the width of the vehicle body 11. A bottom surface 40e of the outlet section 40b of the conducting pipe 40 and a bottom surface 41d of the inlet section 41a of the sub-exhaust pipe 41 are connected to an outer surface 39a of the sub-muffler 39 so as to be tangential to the outer surface 39a. That is, when the sub-exhaust portion 36 is attached to the lower portion of the vehicle body 11, no steps (projections or recesses) are formed on a surface of the vehicle body 11 that faces the floor of the factory or the ground surface.

In the present embodiment, the attaching seats 48 protrude from the base plate 45. Therefore, when the sub-exhaust portion 36 is attached to the vehicle body 11, an air layer S the size of which corresponds to the vertical dimension of the attaching seats 48 is defined between the front frame portion FF and the base plate 45. The sub-exhaust portion 36 is attached to the vehicle body 11 with a heat insulator 49 located in the air layer S, so that the heat of the sub-exhaust portion 36 does not influence the vehicle body 11.

Hereinafter, the flow of exhaust gas in the exhaust structure of the forklift 10 according to the present embodiment will be described.

Exhaust gas from the engine 29 flows to the main exhaust portion 35 through the exhaust gas pipe 29a. The exhaust gas flowing into the main exhaust portion 35 then flows in to the main muffler 37. Thereafter, the exhaust gas is conducted to the sub-exhaust portion 36 from the main exhaust pipe 38 connected to the main muffler 37.

After flowing into the sub-exhaust portion 36, the exhaust gas flows into the conducting pipe 40 from the coupling pipe 40d, and is conducted to the sub-muffler 39 arranged in a front portion of the vehicle body 11 through the conducting pipe 40. That is, in the sub-exhaust portion 36, exhaust gas of the engine 29 is temporarily sent to the front portion of the vehicle body 11. Then, the exhaust gas flowing through the conducting pipe 40 flows into the sub-muffler 39 through the guiding pipe 42 connected to the outlet section 40b. Then, the exhaust gas that has flowed into the sub-muffler 39 flows into the sub-exhaust pipe 41 connected to the sub-muffler 39, and is conducted to the outlet section 41b of the sub-exhaust pipe 41 arranged in the rear section of the vehicle body 11. That is, in the sub-exhaust portion 36, exhaust gas that has sent to the front portion of the vehicle body 11 through the conducting pipe 40 is returned to the rear portion of the vehicle body 11 again via the sub-muffler 39. Then, the exhaust gas flowing through the sub-exhaust pipe 41 is discharged to the outside of the vehicle 11 from the rear of the vehicle body 11 through the outlet section 41b.

The present embodiment has the following advantages.
(1) The sub-exhaust portion 36 is attached to the lowest portion of the vehicle body 11, which is a dead space. Therefore, when using a muffler of a large volume or when adding the sub-exhaust portion 36 to the main exhaust portion 35, the space for installing the exhaust portion is easily reserved. Therefore, it is possible to provide an exhaust structure that can be arranged in a limited space in the vehicle body of an industrial vehicle.
(2) According to the exhaust structure of the present embodiment, a muffler having a large volume or a sub-muffler is easily installed additionally, so that the noise reduction performance is improved. In a hybrid forklift like the forklift 10 of the present embodiment, which has the vehicle driving motor 28 and engine 29, noise is low when the vehicle driving motor 28 is operating, for example, when the forklift 10 is traveling. However, when the engine 29 operates, the noise of the engine 29 is conceived to be loud to the driver and people around the forklift 10 in comparison with the low noise of the motor 28. However, in the present embodiment, the main exhaust portion 35 and the sub-exhaust portion 36 are mounted on the forklift 10 to improve the noise reduction performance for the engine 29. This maintains the noise level when the engine 29 is operating to be the same as the noise level when the motor 28 is operating.
(3) The conducting pipe 40 and the sub-exhaust pipe 41 are each formed to have a cross section that is long sideways. The ground clearance of the forklift 10 is determined such that the conducting pipe 40 and the sub-exhaust pipe 41 attached to the lower part of the vehicle body 11 do not contact the ground surface of the floor of a factory. According to the present embodiment, the ground clearance of the forklift 10 hardly causes such contact. That is, when installing the sub-exhaust portion 36, the ground clearance of the forklift 10 does not need to be increased to enlarge the lower region of the vehicle body 11. Also, the size of the cabin 18 does not need to be reduced to lower the vehicle height of the forklift 10. Further, since the cross section of each of the conducting pipe 40 and the sub-exhaust pipe 41 are elongated sideways, the flow passage area of exhaust gas is large. This improves the exhaust performance.
(4) The sub-muffler 39 is attached to the drive unit located between the drive wheels 24. The section about the axle 26 of the drive wheels 24 has a wide clearance from the ground surface or the factory floor in comparison with the lower portion of the front frame portion FF. That is, the section has a sufficient space for installing the sub-muffler 39. Therefore, without increasing the vehicle height of the forklift 10, the size of the sub-muffler 39 can be greater than the case in which it is attached to the lower portion of the front frame section FF. The dead space about the axle 26 of the drive wheels 24 is therefore efficiently utilized.
(5) The sub-exhaust portion 36 is attached to the lower portion of the vehicle body 11 with the heat insulator 49 in between. Therefore, although the muffler and the piping (the conducting pipe 40 and the sub-exhaust pipe 41) are heated as exhaust gas flows therethrough, such heat hardly influences the vehicle body 11. Therefore, other components (the harness and the hydraulic mechanism) are hardly influenced by the heat.
(6) Since the sub-exhaust portion 36 is unitized, the sub-muffler 39 and piping (the conducting pipe 40 and the sub-exhaust pipe 41), which constitute the sub-exhaust portion 36, can be handled all together. Therefore, the installation of the sub-exhaust portion 36 to the vehicle body 11 is facilitated. Also, the sub-exhaust portion 36 is easily retrofitted to a vehicle that is provided only with the main exhaust portion 35. Further, the inventory control and the transportation of the sub-exhaust portion 36 are facilitated.
(7) Since the sub-exhaust portion 36 is attached to the lower portion of the vehicle body 11, the length of the path of the exhaust gas from the engine 29 to the sub-muffler 39 (the conducting pipe 40, in this embodiment) is extended so that the noise reducing performance is further improved.
(8) The vertical dimension of the connection sections (the inlet section 40a, the outlet section 40b, and the inlet section 41a) of the sub-muffler 39, the conducting pipe 40, and the sub-exhaust pipe 41 is greater than that of the nonconnection sections (the passage sections 40c, 41c). Thus, the volume at the connection sections, where the flow of exhaust gas is changed, is increased. This suppresses the generation of noise due to the interference of gas flow. The noise reducing performance is therefore further improved.
(9) Since the sub-exhaust pipe 41 extends between the axle 26 of the drive wheels 24 and the axle 25a of the steered wheels 25, the sub-exhaust pipe 41 discharges exhaust gas rearward of the vehicle body 11 like the main exhaust portion 35. That is, exhaust gas is discharged in a position rearward of the cabin 18.

It should be apparent to those skilled in the art that the present invention may be embodied in many other specific forms without departing from the spirit or scope of the invention. Particularly, it should be understood that the invention may be embodied in the following forms.

In the illustrated embodiment, the shapes of the conducting pipe 40 and the sub-exhaust pipe 41 may be changed. Fig. 7A illustrates a modification in which the cross sections of the conducting pipe 40 and the sub-exhaust pipe 41 are elliptical. Fig. 7B shows a structure in which the conducting pipe 40 includes two pipes of a circular cross section. Also, the sub-exhaust pipe 41 includes two pipes of a circular cross section. The conducting pipe 40 and the sub-exhaust pipe 41 are arranged adjacent to each other. When a number of pipes having a circular cross section, the number of the pipes is set such that necessary flow passage area is obtained. In either of the constructions of Figs. 7A and 7B, the conducting pipe 40 and the sub-exhaust pipe 41 have an oblong shape.

The sub-exhaust pipe 41 may be shorter than the conducting pipe 40. That is, the sub-exhaust pipe 41 may be short as long as it is capable of discharging exhaust gas from the rear of the vehicle body 11 after the exhaust gas is sent to the front section of the vehicle body 11. The sub-exhaust pipe 41 may be extended compared to that in the illustrated embodiment.

In the illustrated embodiment, the heat insulator 49 between the sub-exhaust portion 36 and the front frame portion FF may be omitted so that the air layer remains between the sub-exhaust portion 36 and the front frame portion FF.

In the illustrated embodiment, the exhaust structure of the forklift 10 may be configured only with the sub-exhaust portion 36, so that the sub-exhaust portion 36 functions as the main path of exhaust gas. According to this configuration, the spaces of the rear frame portion RF and the weight portion W, in which the main muffler 37 and the main exhaust pipe 38 are provided, may be used for accommodating other components, which adds to the flexibility of design of the forklift 10. Also, since the source of heat generated due to the flow of exhaust gas does not exist in the vehicle body 11, the influence of heat to the vehicle body 11 is reduced.

The exhaust structure of the embodiment may be applied to a forklift that only has an engine.

The embodiment may be applied to an industrial vehicle that is not a forklift and has an engine located in a rear section.

The present examples and embodiments are to be considered as illustrative and not restrictive and the invention is not to be limited to the details given herein, but may be modified within the scope and equivalence of the appended claims.

An exhaust structure for a forklift having an engine mounted in a rear section is disclosed. The exhaust structure includes a conducting pipe, a sub-muffler, and a sub-exhaust pipe. The conducting pipe conducts exhaust gas discharged from the engine to a front section of the forklift. The sub-muffler is arranged in a front section of the forklift and connected to the conducting pipe. The sub-exhaust pipe conducts exhaust gas that has passed through the sub-muffler to the rear section of the forklift. The conducting pipe, the sub-muffler, and the sub-exhaust pipe are attached to a lower portion of the forklift.

## Claims

1. An exhaust structure for an industrial vehicle (10) having an engine (29) mounted in a rear section of the vehicle (10), the exhaust structure **being characterized by:**
a first pipe (40) for conducting exhaust gas discharged from the engine (29) to a front section of the vehicle (10);
a muffler (39) that is located in the front section of the vehicle (10) and connected to the first pipe (40); and
a second pipe (41) for conducting the exhaust gas that has passed through the muffler (39) to the rear section of the vehicle (10),
wherein the first pipe (40), the muffler (39), and the second pipe (41) are attached to a lower portion of the vehicle (10).

2. The exhaust structure according to claim 1, **characterized in that** the first pipe (40) and the second pipe (41) each have a cross section that is long sideways in a direction of the width of the vehicle (10).

3. The exhaust structure according to claim 1 or 2, **characterized in that** the muffler (39) is located between front wheels (24) of the vehicle (10).

4. The exhaust structure according to any one of claims 1 to 3, **characterized in that** a heat insulator (49) is located between a vehicle body frame (FF, RF, W) and the first and second pipes (40, 41).

5. The exhaust structure according to any one of claims 1 to 4, **characterized in that** the first pipe (40), the muffler (39), and the second pipe (41) form a single assembly.

6. The exhaust structure according to any one of claims 1 to 5, **characterized in that** the first pipe (40) has an outlet section (40b) connected to the muffler (39), wherein the second pipe (41) has an inlet section (41b) connected to the muffler (39), wherein the muffler (39) has a cylindrical outer surface (39a), and a bottom surface (40e) of the outlet section (40b) and a bottom surface (41d) of the inlet section (41a) are connected to the outer surface (39a) of the muffler (39) so as to be tangential to the outer surface (39a).

7. The exhaust structure according to any one of claims 1 to 5, **characterized in that** the first pipe (40) has an outlet section (40b) connected to the muffler (39), wherein the second pipe (41) has an inlet section (41a) connected to the muffler (39), and wherein the cross-sectional area of each of the outlet section (40b) and the inlet section (41a) is increased toward the muffler (39).

8. The exhaust structure according to any one of claims 1 to 7, **characterized by** a base plate (45) fixed to a vehicle body frame (FF, RF, W) of the vehicle (10),
wherein each of the first pipe (40) and the second pipe (41) has a channel-like cross-section and is attached to the base plate (45) so as to form a passage through which exhaust gas flows.

9. The exhaust structure according to any one of claims 1 to 7, **characterized in that** the first pipe (40) and the second pipe (41) each have an elliptical cross section.

10. The exhaust structure according to any one of claims 1 to 9, **characterized in that** the muffler (39) is a sub-muffler (39), the exhaust structure (35, 36) further comprising:
an exhaust path (29a, 38) extending between the engine (29) and the first pipe (40); and
a main muffler (37) located in the exhaust path (29a, 38), the main muffler (37) being located rearward of the sub-muffler (39) in the vehicle.
